# EUROPEAN PATENT APPLICATION

(11) **EP 4 336 876 A1**
(43) Date of publication of application: **13.03.2024**
(21) Application number: 21939856.7
(22) Date of filing: 07.05.2021
(51) Int. Cl.: H04W 8/20

(54) **SERVER, TERMINAL, AND CONTROL METHOD**

(71) Applicant: NTT DOCOMO, INC., Tokyo 100-6150 (JP)
(72) Inventor: SASAGAWA Tetsuhiro, Tokyo 100-6150 (JP); OOHARA Syunsuke, Tokyo 100-6150 (JP); IIZUKA Yousuke, Tokyo 100-6150 (JP); HASHIMOTO Kenji, Tokyo 100-6150 (JP)
(74) Representative: Hoffmann Eitle
(86) International application number: PCT/JP2021/017547
(87) International publication number: WO 2022/234664

(57) **Abstract**

The server (400) controls the new terminal (200') to download the profile to be deleted by the old terminal (200) configured in the embedded subscriber identification module (250). The server (400) receives information on the success or failure of the download from the new terminal (200'). When the download fails, the server (400) transmits the profile to the old terminal (200) for re-downloading.

## Description

### [Technical Field]

The present invention relates to a server, terminal, and control method for executing radio communication, in particular, a server, terminal and control method supporting a model change of a terminal equipped with an embedded subscriber identification module.

### [Background Art]

In the GSM Association (GSMA), remote subscriber identification module provisioning (RSP), which allows a terminal to download a profile consisting of data including subscriber information and an application for controlling the use of the communication service from a network, is specified at the time of a contract for using the communication service (see Non-Patent Literature 1).

In the RSP, the terminal configures the downloaded profile to an embedded subscriber identification module (eSIM: Embedded Subscriber Identity Module). Thus, the terminal can perform the communication line opening processing at the time of the contract of using the communication service via the network using the eSIM. The software part whose profile is rewritten is called the eSIM, while the hardware part is called the eUICC (Embedded Universal Integrated Circuit Card).

In actual use, it is necessary to activate specific subscriber information in the eSIM. From the terminal/network (NW), the eSIM is recognized only as a SIM with only activated subscriber information written, and if there is no activated subscriber information, it is recognized as a SIM without subscriber information.

### [Citation List]

### [Non-Patent Literature]

[Non-Patent Literature 1]
GSMA SGP. 21 RSP Architecture Version 2.2, September 2017

### [Summary of Invention]

In recent years, the number of eSIM-equipped terminals has increased, but there is currently no specification for changing the model of eSIM-equipped terminals.

However, in order to change the model of eSIM-equipped terminals, subscriber information is written to the new User Identity Module (UIM) wirelessly, and therefore, it is necessary to determine whether or not a device can be downloaded at the server, and to distinguish between new and old devices in order to prevent cloning, etc.

On the other hand, if a download fails on a new device, the connection will be lost unless there is a method to restore communication on the old device.

Therefore, the present invention has been made in view of such a situation, and it is an object of the present invention to provide a server, a terminal, and a control method capable of restoring communication in the case of a download failure on a new device, while preventing a clone or the like, with respect to a model change of a terminal equipped with an eSIM.

A server (400) according to one aspect of the present invention is provided with a control unit (440) configured in an embedded subscriber identification module (250) for controlling a new terminal (200') to download a profile to be deleted by the old terminal (200), a reception unit (420) for receiving information on the success or failure of the download from the new terminal (200'), and a transmission unit (410) for transmitting the profile to the old terminal (200) for re-downloading when the download fails.

A terminal (200) according to one aspect of the present invention is provided with a control unit (240) for deleting a profile configured in an embedded subscriber identification module (250), and a reception unit (220) for re-downloading a profile when another terminal (200') fails to download the profile, and the control unit (240) reconfigures the profile in the embedded subscriber identification module (200).

A communication method according to one aspect of the present invention includes a step for controlling a new terminal (200') to download a profile deleted by the old terminal (200) configured in the embedded subscriber identification module (250), a step for receiving information on the success or failure of the download from the new terminal (200'), and a step for transmitting the profile to the old terminal (200) for re-downloading when the download fails.

A communication method according to one aspect of the present invention includes a step for deleting a profile configured in the embedded subscriber identification module (250), a step for re-downloading the profile when another terminal (200') fails to download the profile, and a step for reconfiguring the profile to the embedded subscriber identification module (200).

### [Brief Description of Drawings]

[FIG. 1] FIG. 1 is an overall schematic configuration diagram of the communication system 10.
[FIG. 2] FIG. 2 is a functional block configuration diagram of the terminal 200.
[FIG. 3] FIG. 3 is a functional block diagram of the SM server 400.
[FIG. 4] FIG. 4 is a diagram showing an operation flow at the time of success in the communication system 10.
[FIG. 5] FIG. 5 is a diagram showing an operation flow at the time of failure in the communication system 10.
[FIG. 6] FIG. 6 is a diagram showing an operation flow at the time of success in the communication system 10.
[FIG. 7] FIG. 7 is a diagram showing an operation flow at the time of failure in the communication system 10.
[FIG. 8] FIG. 8 is a diagram showing an example of a hardware configuration of the radio base station 100, the terminal 200, the contract site 300, the SM server 400, the customer management system 500, and the information management server 600.

### [Modes for Carrying out the Invention]

Exemplary embodiments of the present invention are explained below with reference to the accompanying drawings. The same functions and configurations are denoted by the same or similar reference numerals, and their descriptions are omitted accordingly.

### (1)Overall general configuration of the communication system

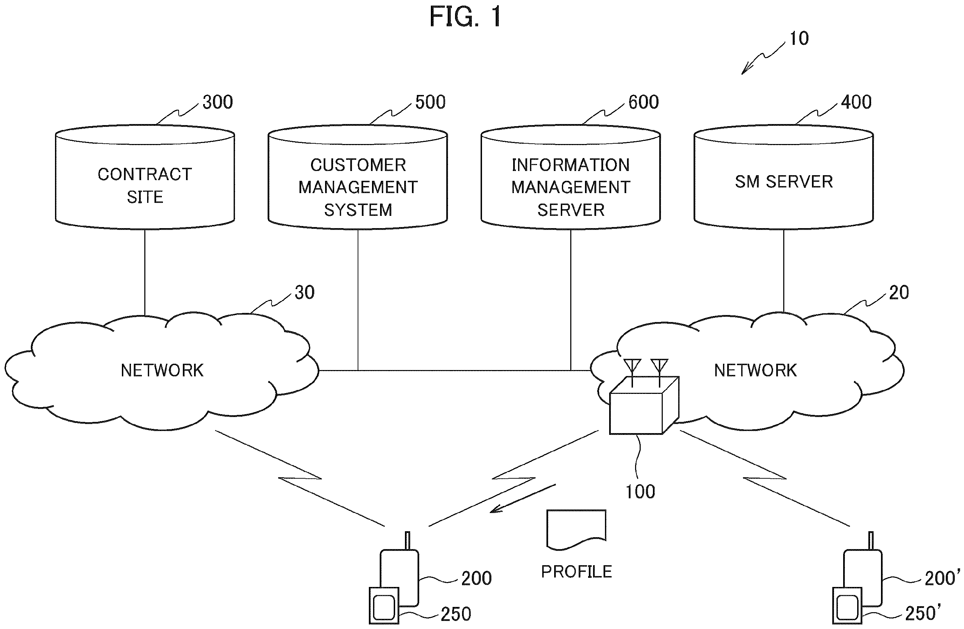

FIG. 1 is an overall general schematic configuration diagram of a communication system 10 according to the present embodiment.

As shown in FIG. 1, the communication system 10 includes, by way of example, a network 20 such as a 3GPP network, a network 30 such as a non-3GPP network, a radio base station 100, a terminal 200, a contract site 300, a subscription management (SM) server 400, an information management server 600, and a customer management system 500. The terminal is also referred to as a User Equipment (UE). The contract site is also referred to as an operator or carrier. The specific configuration of the communication system 10 including the number of devices (contract site 300, subscription management (SM) server 400, information management server 600, customer management system 500, etc.), radio base stations and terminals of the network is not limited to the example shown in FIG. 1. For example, the server on the network side may be at least one device implementing the present invention, and in the following embodiments, at least one device of the radio base station 100, the contract site 300, the subscription management (SM) server 400, the information management server 600 and the customer management system 500 may be omitted, and the functions of the device may be possessed by other devices.

The network 20 is a 5G (NR) (or 6G) network, such as a 3GPP network, and includes a Next Generation-Radio Access Network (NG-RAN, not shown) and a core network (5G-CN, not shown). The NG-RAN includes an NG-RAN Node, specifically the radio base station 100 (gNB or ng-eNB), connected to a 5G-CN (or 6G. same as below).

The radio base station 100 performs radio communication in accordance with NR or 6G between the radio base station 100 and the terminal 200.

The radio base station 100 and the terminal 200 can support Massive MIMO, which generates a more directional beam by controlling radio signals transmitted from multiple antenna elements; Carrier Aggregation (CA), which uses multiple component carriers (CCs); Dual Connectivity (DC), which simultaneously transmits CCs between multiple NG-RAN Nodes and the terminal; and Integrated Access and Backhaul (IAB), which integrates radio backhaul between radio communication nodes such as gNB and radio access to the UE. The CC is also called a carrier.

The network 20 may be a network according to LTE instead of NR or 6G. In this case, the 3GPP network 20 includes an Evolved Universal Terrestrial Radio Access Network (E-UTRAN) and an Evolved Packet Core (EPC). The E-UTRAN includes a radio base station (eNB or en-gNB) and is connected to an EPC.

The network 30 is a non-3GPP network or the like, a wireless local area network (wireless LAN) such as wireless fidelity (Wi-Fi), or a wired LAN. The network 30 is not particularly limited to a network in which the terminal 200 can access the contract site 300 using a uniform resource locator (URL) or the like.

The terminal 200 executes an RSP for downloading a profile consisting of data including subscriber information and an application for controlling the use of the communication service from the 3GPP network 20 at the time of the contract for using the communication service. The profile may be called a production profile.

The subscriber information may include an International Mobile subscriber Identifier (IMSI) that is uniquely assigned to the user using the communication service, a telephone number that is uniquely assigned to the user using the communication service, and contract information that includes a pricing plan applicable to the terminal 200. The subscriber information is provided from the contract site 300.

In the RSP, when attaching to the 3GPP network 20, the terminal 200 may transmit a request to download a profile corresponding to an AC (Activation Code) received from the network 30 at the time of the communication service contract to the radio base station 100 via the 3GPP network 20. When the request for a profile is received from the terminal 200, the radio base station 100 may transmit (transfer) the request to the SM server 400.

In this embodiment, as described later, in order to change the model of the terminal, the old terminal 200 deletes the profile, while the new terminal 200' downloads the profile from the SM server 400 via the 3GPP network 20. The terminal 200 installs the downloaded profile in the embedded subscriber identification module (eSIM) 250 described later and activates the profile, thereby enabling the terminal to use the communication service in the 3GPP network 20. In this embodiment, if the new terminal 200' fails to download the profile, the old terminal 200' can re-download the profile.

In this embodiment, the profile may be capable of transitioning between active and inactive states. For example, the old terminal 200 may keep the profile inactive without deleting it until the new terminal 200' succeeds in downloading the profile, and the old terminal 200 may delete the profile after the new terminal 200' succeeds in downloading the profile. The active or inactive state of the profile may be controlled by the network. For example, the terminal 200 may receive instruction information from the network and control the active or inactive state of the profile according to the instruction information. The network device that transmits the instruction information may be the information management server 600, the SM server 400, or any other device.

The contract site 300 is connected to a network (network 20 and/or network 30). When the contract site 300 receives the contract information (IMEI, EID, etc.) based on the communication contract, the contract information may be transmitted to the customer management system 500, and the customer management system 500 may transmit a profile generation request to the SM server 400 based on the contract information. When the model change is performed in this embodiment, as an example, when the SM server 400 receives the model change request together with the new model information (For example, the identification information (e.g., EID (eUICC Identifier)) of the new terminal 200' and the old terminal 200 is associated with each other.), and transmits the new model information to the customer management system 500, a profile generation request requesting profile preparation for the new terminal 200' may be received from the customer management system 500. In addition, the information concerning the model change may be transmitted to the SM server 400 through the contract site 300 and the customer management server 500. The customer management system 500 may transmit at least an EID (In addition, IMEI and telephone numbers may be added.) included in the contract information to the SM server 400. Detailed specific examples will be described later.

The SM server 400 is connected to a network (network 20 and/or network 30). When the SM server 400 receives a profile generation request, it generates a profile and transmits it to the terminal 200. In this embodiment, the SM server 400 controls the new terminal 200' to download a profile configured in the embedded subscriber identification module 250' that is deleted by the old terminal. For example, the SM server 400 transmits the profile to the new terminal 200' associated with information about the old terminal 200 and/or to the old terminal 200 associated with information about the new terminal 200' based on information about the new model. More specifically, the SM server 400 may generate a profile to the new terminal 200' associated with the old terminal 200 EID based on download new model information including a profile generation request to the new model. The SM server 400 may also transmit a profile to the old terminal 200 associated with the new terminal 200' EID in the case of a download failure of the new terminal 200'.

The profile initially generated by the SM server 400 may be called a temporary profile. In this case, when the temporary profile is transmitted to the new terminal 200' without the production profile being transmitted to the new terminal, initially, and when information about profile deletion is received from the old terminal 200, and/or when success information such as downloading the temporary profile is received from the new terminal 200', the production profile may be transmitted to the new terminal 200'. The SM server 400 may transmit information (e.g., AC) including the SM address and the Matching ID (identifier associated with the profile) to the customer management server 500 or the like. The customer server 500 may transmit AC to the contract site 300, and the contract site 300 may transmit AC to the terminal 200 via the network 30.

As an example of the "server" of the present invention, the SM server 400 will be described in this embodiment as an example, but it is not limited to this, and other network devices (including the customer management system 500 or the information management server 600, etc.) may perform some or all of the processing, and the functions may be distributed arbitrarily.

The customer management system 500 is connected to the network and manages contract information such as subscriber information. For example, the customer management system 500 maintains contract information (For example, IMEI, EID, etc. of the old and new terminal 200) based on information at the time of contract of a mobile phone. The customer management system 500 may also transmit contract information to the customer management server 500 and the SM server 400. The entity that holds contract information, etc. to which the old and new terminals 200 are connected, the entity that receives a request for a model change, and the entity that transmits instruction information, etc. may be any of, for example, the contract site 300, the SM server 400, the information management server 600, and the customer management system 500. For example, the information management server 600 may be connected to a network, hold the old and new terminal information in a reference table that links the information (IMEI, EID, etc. of the old terminal 200) of the old terminal 200 with the information (IMEI, EID, etc., of the new terminal 200 ') of the new terminal 200', and transmit the old and new terminal information to a network device such as the SM server 400 in response to a request or inquiry from the network.

### (2)Function block configuration of communication system

Next, the function block configuration of communication system 10 will be described. Specifically, the function block configuration of terminal 200 and SM server 400 will be described. Hereinafter, only the parts related to the features in this embodiment will be described. Therefore, the terminal 200 and the SM server 600 may of course include other functional blocks not directly related to the features in this embodiment. Also, some or all of the functions of the contract site 300, the information management server 600, the customer management system 500, the SM server 400, the radio base station 100, and the like may be held on behalf of another device, which may include the following functional block configuration (transmission unit, reception unit, control unit) of the SM server 400.

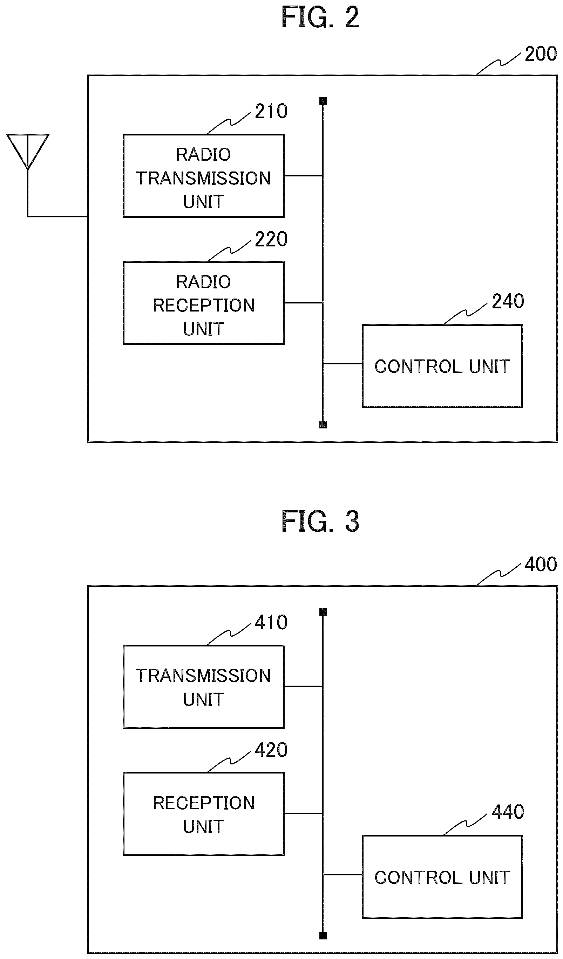

For convenience, a functional block configuration diagram of the terminal 200 will be described first. FIG. 2 is a functional block configuration diagram of the terminal 200. As shown in FIG. 2, the terminal 200 includes a radio transmission unit 210, a radio reception unit 220, and a control unit 240.

The radio reception unit 220 receives a downlink signal (DL signal) in accordance with NR (or 6G. hereinafter the same) from the radio base station 100. In this embodiment, the radio reception unit 220 functions as a reception unit that receives the profile configured in the eSIM from the network 20. More specifically, the radio communication unit 220 of the new terminal 200' downloads a profile (which may be the same profile) corresponding to the (if deleted, including if deleted in the future) profile deleted by the old terminal 200 from the SM server 400 via the network 20. In addition, the radio communication unit 220 of the old terminal 200 re-downloads the profile (which may be the same profile) corresponding to the deleted profile when the new terminal 200' fails to download the profile.

The radio transmission unit 210 transmits an uplink signal (UL signal) in accordance with the NR (or 6G) to the radio base station 100, the contract site 300, or the like. In this embodiment, the radio transmission unit 210 functions as a transmission unit that transmits various types of information related to model changes to the network 20 (to 30 or below). For example, the radio transmission unit 210/radio transmission unit 210 may transmit/receive model information (IMEI, EID, etc.) between the old and new terminals 200/200'. Thus, the information on the old and new terminals 200/200' can be linked, and the information on the old terminal 200 (IMEI, EID, etc.) and the information on the new terminal 200' (IMEI, EID, etc.) can be linked to generate the old and new terminal information, etc. In addition, the radio transmission unit 210 may transmit information on the contract to the contract site 300, etc. In addition, the radio transmission unit 210 may transmit profile acquisition instruction information to the new terminal 200'. In addition, the radio transmission unit 210 may transmit a profile download request or the like to the SM server 400. A detailed specific example will be described later.

The radio transmission unit 210 and the radio reception unit 220 execute radio communication via a control channel or a data channel.

The control channel includes a physical downlink control channel (PDCCH), a physical uplink control channel (PUCCH), a physical random access channel (PRACH), and the like.

The data channel includes a physical uplink shared channel (PDSCH), a physical uplink shared channel (PUSCH), and the like.

The control unit 240 has functions such as a local profile assistant (LPA), downloads a profile from the SM server 400, and installs (configures) the profile in the eSIM 250. In this embodiment, the control unit 240 of the old terminal 200 functions as a control unit for deleting the profile installed (configures) in the eSIM 250. The control unit 240 of the old terminal 200 may reinstall (reconfigure) the re-downloaded profile in the eSIM 250 based on the profile re-download instruction information or the like based on the failure to download the profile in the new terminal 200'. The control unit 240 may activate/deactivate the profile installed in the eSIM 250 based on the instruction information or the like. For example, the control unit 240 of the old terminal 200 may deactivate the profile until it receives a profile deletion request based on the successful download of the profile by the new terminal 200'.

Note that the eSIM 250 is a software part to which the profile is written. The hardware part to which the profile is written is called an embedded universal accumulation circuit card (eUICC).

The profile installed in the eSIM 250 allows the network (in other words, an external or administrator) to control the active/inactive status of the profile, i.e., the availability/unavailability of the eSIM, without physically inserting or removing subscriber Identification Module (SIM).

If the activated profile does not exist in the eSIM 250, the eSIM 250 is recognized by the network as a SIM to which no profile has been written.

The eSIM 250 has a shape that is not removable from the terminal 200, but is not limited thereto, and may be removable from the terminal 200.

In addition, the control unit 240 controls each functional block that constitutes the terminal 200. The control unit 240 executes the operation of attaching to the 3GPP network 20.

FIG. 3 is a functional block diagram of the SM server 400. As shown in FIG. 3, the SM server 400 includes a transmission unit 410, a reception unit 420, and a control unit 440.

The reception unit 420 receives various kinds of information (Examples: new model information, model change request, new and old terminal information, profile download request, profile deletion notification, etc.) via a network. In particular, in this embodiment, the reception unit 420 functions as a reception unit that receives information on the success or failure of downloading a profile from the new terminal 200. In addition, the reception unit 420 may query the information (IMEI, EID, etc.) of the terminal 200 that sent the request to a reference table such as the customer management system 500 or the information management server 600 that holds the old and new terminal information, and receive the information (IMEI, EID, etc.) of the corresponding (i.e., old and new) terminal 200'.

The transmission unit 410 transmits various kinds of information (Example: Profile, Inquiry Information, Request, Instructions Information, etc.) via a network. In this embodiment, the transmission unit 410 may query the information (IMEI, EID, etc.) of the user (person under management) of the terminal 200 that has transmitted the request to a reference table in which the old and new terminal information is stored, and transmit the profile or the like to the terminal 200' of the corresponding terminal information (IMEI, EID, etc.). The transmission unit 410 may also transmit the instruction information that controls the active or inactive status of the profile to the terminal 200. For example, the transmission unit 410 may transmit instruction information to the old terminal 200 to control the profile of the old terminal 200 to an inactive state before transmitting the profile to the new terminal 200'. Then, the transmission unit 410 may transmit instruction information to delete the profile of the old terminal 200 to the old terminal 200 when the new terminal 200' successfully downloads the profile. On the other hand, the transmission unit 410 may transmit instruction information to restore the profile of the old terminal 200 to the active state to the old terminal 200 when the new terminal 200' fails to download the profile.

The control unit 440 controls each function block constituting information management server 600. In this embodiment, the control unit 140 functions as a control unit that generates a profile and controls the download state, the installation (configuration) state, or the active/inactive state of the profile in the old/new terminal 200/200'. For example, the control unit 440 functions as a control unit that controls the new terminal 200' to download a (When deleted in the future, including when deleted already) profile configured in eSIM that is deleted in the old terminal 200'. In particular, the control unit 440 controls the model change so that a clone terminal with the same profile does not occur in other terminals. Therefore, in the model change, the control unit 440 may control the other terminal to download the profile when the profile is deleted or becomes inactive in one terminal, and may control the other terminal to re-download or activate the profile when the profile download fails (Includes failed installation, failed activation) in the other terminal. The control unit 440 may specify the terminal corresponding to the old and new by referring to the old and new terminal information stored in a reference table such as SM server 400.

### (3)operation of the communication system

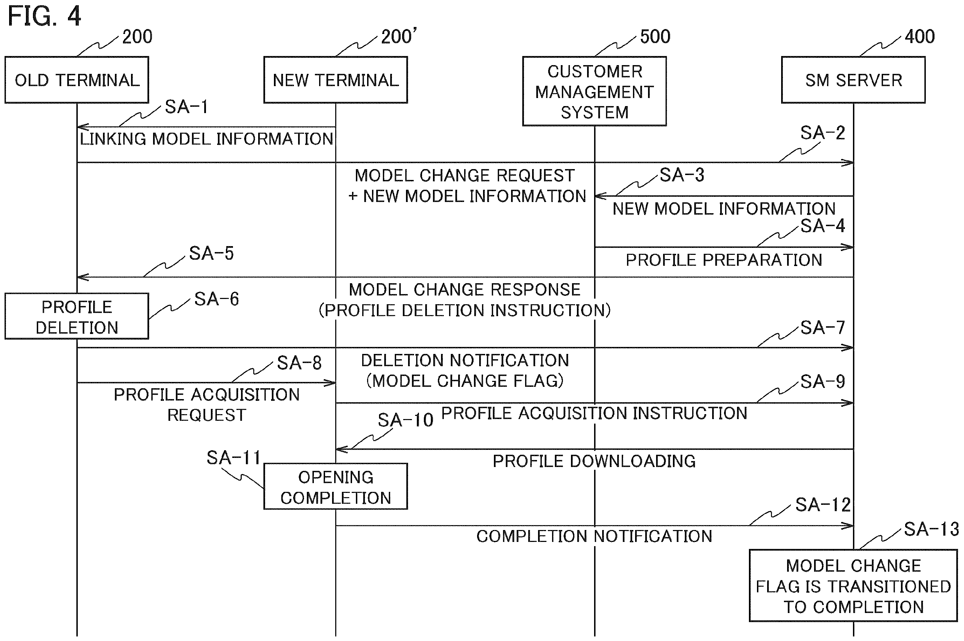

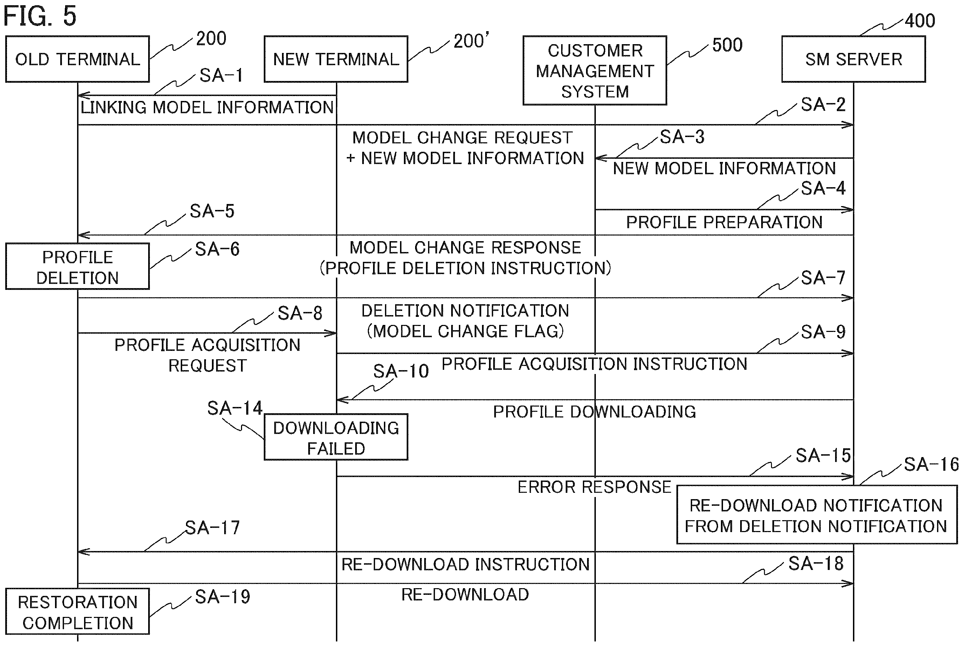

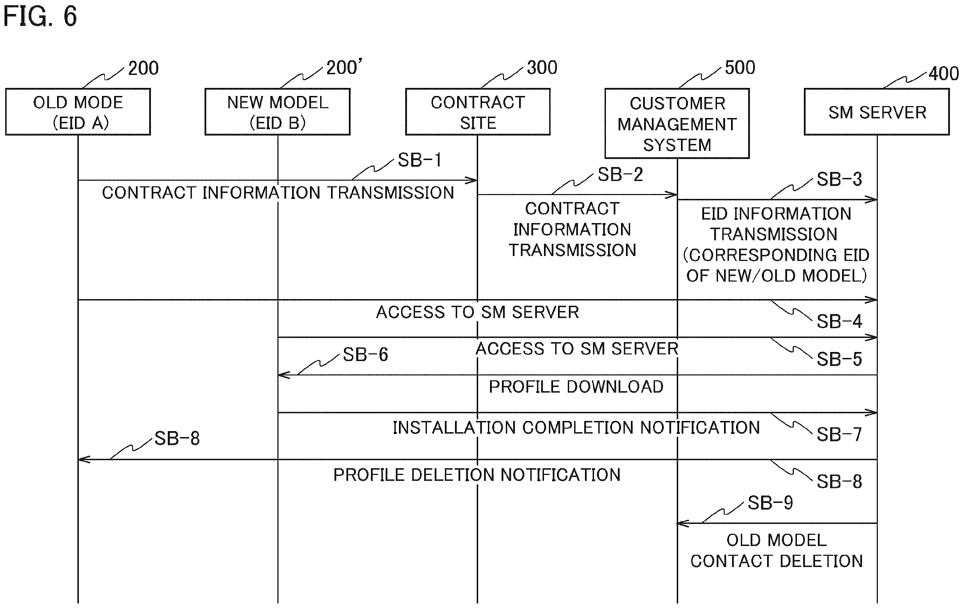

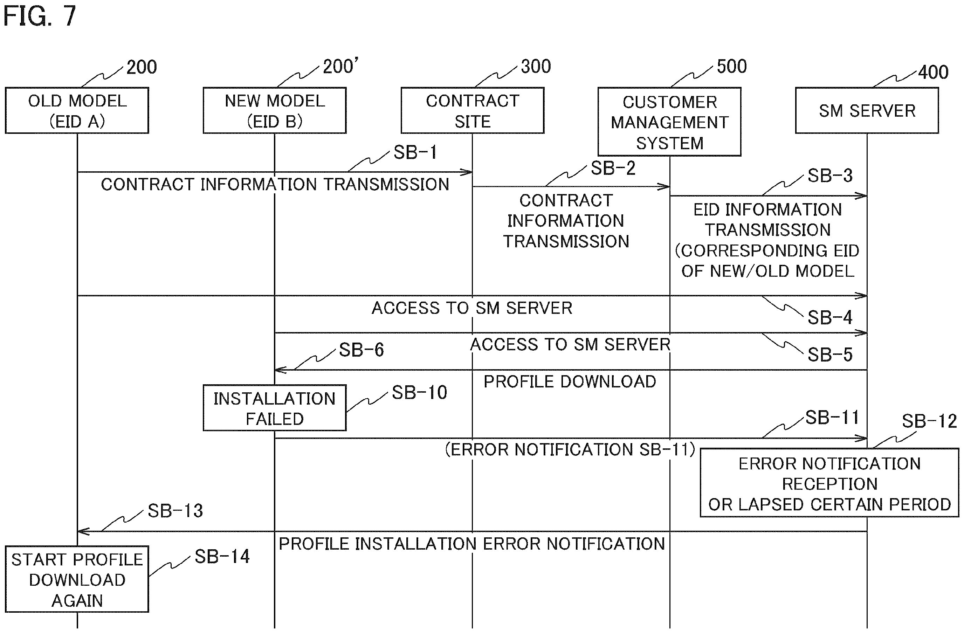

Next, the operation of the communication system 10 in relation to the model change of the old and new models will be described. Specifically, an operation example in the case where the download of the profile is successful and the case where the download of the profile is unsuccessful will be described with reference to FIGS. 4 and 5, respectively, as an embodiment 1. An operation example in the case where the download of the profile is successful and the case where the download of the profile is unsuccessful will be described with reference to FIGS. 6 and 7, respectively, as another embodiment (embodiment 2). It goes without saying that this embodiment is not limited to these specific examples.

### (3.1) Example 1

FIG. 4 is a diagram showing the flow of various types of information in the communication system 10. FIG. 5 is a diagram showing an operation sequence in the communication system 10.

As shown in FIG. 4, the new terminal 200' first transmits model information (IMEI, EID, etc.) of the new terminal 200' to the old terminal 200 (SA-1). Although the communication means between the new terminal 200' and the old terminal 200 is optional, information may be transmitted and received using a short-range communication technology such as Bluetooth.

The old terminal 200 transmits a model change request (may include model information of the old terminal 200) together with new model information of the new terminal 200' to the SM server 400 (SA-2) .

The SM server 400 transmits the received new model information (may include model information of the old terminal) to the customer management system 500 (SA-3).

The customer management system 500 transmits a profile request for the new terminal 200' to the SM server 400 (SA-4). The customer management system 500 may transmit the profile request to the SM server 400 only when there is a contract corresponding to the received new model information by referring to the contract information held.

The SM server 400 transmits a model change response instructing the old terminal 200 to delete the profile (SA-5) as a step before transmitting the newly generated profile to the new terminal 200'.

The old terminal 200 deletes the profile based on the profile deletion instruction. (SA-6).

Then, the old terminal 200 transmits to the SM server 400 a deletion notification of the (For example, configuring 0 to 1) profile for configuring a model change flag (SA-7).

Then, the old terminal 200 transmits instruction information instructing the new terminal 200' to acquire the profile (SA-8).

The new terminal 200' transmits a profile acquisition request (download request) to the SM server 400 based on the received profile acquisition instruction information (SA-9).

The SM server 400 transmits the profile to the new terminal 200' based on the profile download request from the new terminal 200' (SA-10).

When the new terminal 200 downloads the profile, the profile is configured in the eSIM, and line opening is completed (SA-11).

Then, the new terminal 200 transmits a completion notification indicating that the profile configuration is successful to the SM server 400 (SA-12).

Then, the SM server 400 makes the model change flag of the new terminal 200' transition to completion (For example, 0→1). The configuration method of the new model change flag by the SM server 400 is optional. For example, the SM server 400 may manage a state in which the terminal has downloaded, installed (configured), or activated the profile as 1, and a state in which the terminal has deleted, uninstalled, or inactivated the profile as 0. The SM server 400 controls the state in which the old and new flags are raised simultaneously (In this case, 1).

For example, the SM server 400 controls the state in which the flag of the old terminal is raised so that the new terminal is not shifted to the state in which the flag is raised. Then, the SM server 400 controls the state in which the flag of the new terminal is raised upon the state in which the flag of the old terminal is lowered. If the state in which the flag of the new terminal is raised fails, the SM server controls the state in which the flag of the old terminal is raised again.

By preventing the state in which the flag co-occurs, it is possible to prevent the occurrence of a clone or the like for the model change of the terminal equipped with the eSIM. In addition, by preventing the state in which the flag both go down, it is possible to restore the communication on the other terminal when the profile configuration on one model fails.

Note that the management by this flag is only an example, and if it is possible to prevent a state in which the same profile is simultaneously available on two or more terminals, and to prevent a state in which a certain profile cannot be used on any terminal, the present embodiment can be implemented by any information management or the like.

FIG. 5 is a flow diagram showing an operation example when the new terminal 200' fails to download the profile. Since SA-1 to SA-10 are the same as above, description thereof will be omitted.

As shown in SA-14 of FIG. 5, when the new terminal 200' fails to download the profile from the SM server 400 (SA-14), the new terminal 200' transmits an error response indicating the failure of the download (which may include the new model information) to the SM server 400 (SA-15).

Upon receiving the error response, the SM server 400 (SA-16) transmits the re-download instruction information urging the corresponding old terminal 200 to re-download based on the old and new terminal information (SA-17).

Thus, the old terminal 200 can restore the communication line (SA-19) by downloading and configuring the profile again from the SM server 400 (SA-19).

### (3.2) Example 2

With regard to eSIM, the user may enter contract information, etc. at the contract site 300. Therefore, an example of operation of the communication system including the contract site 300 will be described with reference to FIGS. 6 (at the time of success) and 7 (at the time of failure) as Embodiment 2.

As shown in FIG. 6, the old terminal 200 first transmits contract information to the contract site 300 (SB-1). In this embodiment, this contract information is contract information related to model change, and may include model information (IMEI, EID, etc.) of the former terminal and the new terminal 200' as an example.

Then, the contract site 300 transmits the contract information to the customer management server 500 (SB-2).

Then, the customer management server 500 transmits information (e.g., EID information) that links model information of the old and new terminals to the SM server 400 (SB-3).

When the old and new terminals 200 access the SM server 400 (SB-4,5), the SM server 400 transmits the profile to the new model 200' (SB-5). At this time, the SM server 400 may transmit instruction information for deactivating the profile of the old terminal to the old terminal 200.

When receiving the profile installation completion notification from the new terminal 200' (SA-7), the SM server 400 transmits a notification for instructing the old terminal 200 to delete the profile (SB-8) and also transmits instruction information for causing the customer management server 500 to delete the old model contract information (SB-9).

On the other hand, as shown in FIG. 7, when receiving the profile installation failure (SB-10) error notification from the new terminal 200' (SA-11) or when not receiving the installation completion notification for a certain period (SA-12), the SM server 400 transmits a notification for instructing the old terminal 200 to re-download the profile (SB-14).

The above is an operation example of the present embodiment. Note that, as described above, if it is possible to prevent the profile from being available at the same time and the profile from being unavailable at any terminal, the management method can be optionally implemented. For example, a profile download success notification may be interpreted or rephrased to mean a profile installation success notification or a profile activation success notification. Similarly, a profile download failure notification may be interpreted or rephrased to mean a profile installation failure notification or a profile activation failure notification.

Similarly, having an old terminal delete a profile may be interpreted or rephrased to uninstall the profile or deactivate the profile. Also, having an old terminal re-download the profile may be interpreted or rephrased to re-back the profile or activate the profile.

### (4)Operational effects

According to the above-described embodiment, when the profile to be deleted by the old terminal (200) configured in the embedded subscriber identification module (250) is controlled to be downloaded by the new terminal (200'), and when information on the success or failure of the download is received from the new terminal (200'), if the download fails, the profile is transmitted to the old terminal (200) for re-downloading.

As a result, it is possible to restore communication even when a download of a new model fails, by preventing a state in which the same profile cannot be used in any of the terminals, while preventing a clone or the like by simultaneously making the same profile unavailable for a model change of the terminal equipped with the eSIM.

In addition, according to this embodiment, the server transmits a profile to the old terminal when information of a download failure is received or information of a download success is not received.

Thus, it is possible to restore the use of the profile of the old terminal not only when the new terminal explicitly notifies that the profile cannot be used, but also when the profile cannot be used implicitly from the new terminal.

In addition, according to this embodiment, information on the success or failure of the download includes information on the terminal, and the server transmits the profile to the new terminal associated with the information on the old terminal or to the old terminal associated with the information on the new terminal.

Thus, the server can transfer the profile from the old terminal to the new terminal by referring to the information associated with the old and new terminal information, or can restore the use of the profile from the new terminal to the old terminal when the use of the profile fails in the new terminal.

In addition, according to the present embodiment, when the download of the profile is successful, the server performs a process of deleting information about the old terminal.

Thus, when the model change is successful, it is possible to contribute to securing resources and reducing the management cost of unnecessary personal information by deleting contract information about the old terminal that is no longer needed.

### (5)Other Embodiments

Although the contents of the present invention have been described in accordance with the above embodiments, it is obvious to those skilled in the art that the present invention is not limited to these descriptions but can be modified and improved in various ways .

The block diagram (FIGS. 2 and 3) used in the description of the above embodiments shows a block of functional units. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that causes transmitting may be called a transmitting unit or a transmitter. For any of the above, as explained above, the realization method is not particularly limited to any one method.

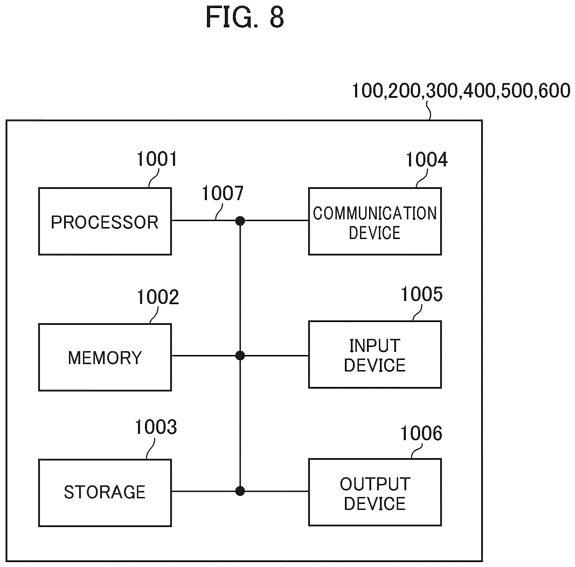

Furthermore, the radio base station 100, the terminal 200, the contract site 300, the SM server 400, the customer management system 500, and the information management server 600 described above may function as a computer for processing the radio communication method of the present disclosure. FIG. 8 is a diagram showing an example of a hardware configuration of the device. As shown in FIG. 8, the device may be configured as a computer device including a processor 1001, a memory 1002, a storage 1003, a communication device 1004, an input device 1005, an output device 1006 and a bus 1007.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device is realized by any hardware element of the computer device or a combination of the hardware elements.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

The processor 1001, for example, operates an operating system to control the entire computer. Processor 1001 may be configured with a central processing unit (CPU) including an interface to peripheral devices, a controller, a computing device, a register, etc.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 may be referred to as a register, cache, main memory (main storage device), or the like. The memory 1002 may store a program (program code), a software module, or the like capable of executing a method according to an embodiment of the present disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each device, such as the processor 1001 and the memory 1002, is connected by a bus 1007 for communicating information. The bus 1007 may be configured using a single bus or a different bus for each device.

In addition, the device may be configured to include hardware such as a microprocessor, a digital signal processor (DSP), an application specific integrated circuit (ASIC), a programmable logic device (PLD), a field programmable gate array (FPGA), or the like, which may provide some or all of each functional block. For example, the processor 1001 may be implemented by using at least one of these hardware.

Information notification is not limited to the aspects/embodiments described in the present disclosure and may be performed using other methods. For example, notification of information may be performed by physical layer signaling (e.g., Downlink Control Information (DCI), Uplink Control Information (UCI), higher layer signaling (e.g., RRC signaling, Medium Access Control (MAC) signaling, Notification Information (Master Information Block (MIB), System Information Block (SIB)), other signals, or a combination thereof. RRC signaling may also be referred to as RRC messages, e.g., RRC Connection Setup messages, RRC Connection Reconfiguration messages, etc.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing steps, sequences, flowcharts, etc., of each of the embodiments/embodiments described in the present disclosure may be reordered as long as there is no conflict. For example, the method described in the present disclosure presents the elements of the various steps using an exemplary sequence and is not limited to the particular sequence presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from a higher layer (or lower layer) to a lower layer (or higher layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each of the embodiments/embodiments described in the present disclosure may be used alone, in combination, or alternatively with execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channels and symbols may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)," "radio base station," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile may be a vehicle (For example, cars, planes, etc.), an unmanned mobile (For example, drones, self-driving cars,), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal, hereinafter the s same). For example, each aspect/embodiment of the present disclosure may be applied to a configuration in which communication between a base station and a mobile station is replaced by communication between a plurality of mobile stations (For example, it may be called device-to-device (D2D), vehicle-to-everything (V2X), etc.). In this case, the mobile station may have the function of the base station. Further, words such as "up" and "down" may be replaced with words corresponding to communication between terminals (For example, "side"). For example, terms an uplink channel, a downlink channel, or the like may be read as a side channel.

Similarly, the mobile station in the present disclosure may be replaced with a base s station. In this case, the base station may have the function of the mobile station.

A radio frame may be composed of one or more frames in the time domain. Each frame or frames in the time domain may be referred to as a subframe.

A subframe may be further configured by one or more slots in the time domain. The subframe may be a fixed time length (For example, 1 ms) independent of numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. A PDSCH (or PUSCH) transmitted in time units greater than a minislot may be referred to as a PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframe and the TTI may be a subframe (1 ms) in the existing LTE, a period shorter than 1 ms (For example, 1-13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. The number of slots (number of minislots) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB relative to the common reference point of the carrier. PRB may be defined in BWP and numbered within that BWP.

BWP may include UL BWP (UL BWP) and DL BWP (DL BWP). One or a plurality of BWPs may be configured in one carrier for the UE.

At least one of the configured BWPs may be active, and the UE may not expect to transmit and receive certain signals/channels outside the active BWP. Note that "cell," "carrier," and the like in this disclosure may be read as "BWP."

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access." In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on."

Any reference to an element using a designation such as "first," "second," and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining", "judging" and "deciding" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. In other words, "judgement" and "decision" may include considering some operation as "judged" and "decided". Moreover, "judgment (decision)" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 communication system
20 (3GPP) network
30 (non-3 GPP) network
100 radio base station
200 terminal
210 radio transmission unit
220 radio reception unit
250 eSIM
240 control unit
300 contract site
400 subscription management (SM) server
410 transmission unit
420 reception unit
440 control unit
500 customer management system
600 information management server
1001 processor
1002 memory
1003 storage
1004 communication device
1005 input device
1006 output device
1007 bus

## Claims

1. A server comprising:
A control unit that controls a new terminal to download a profile configured in an embedded subscriber identification module to be deleted by an old terminal;
a reception unit that receives information on success or failure of the download from the new terminal; and
a transmission unit that transmit to the old terminal for re-downloading the profile when the download fails.

2. The server according to claim 1, wherein the transmission unit transmits the profile to the old terminal when the reception unit receives download failure information or when the reception unit does not receive download success information.

3. The server according to claim 1 or 2, wherein
an information on the success or failure of the download includes information about the terminal, and
the transmission unit transmits the profile to the new terminal associated with information on the old terminal, or to the old terminal associated with information on the new terminal.

4. The server according to claim 1, wherein the control unit deletes information on the old terminal if the download is successful.

5. A terminal comprising:
a control unit that deletes a profile configured in an embedded subscriber identification module; and
a reception unit that re-downloads the profile if another terminal fails to download the profile, wherein
the control unit reconfigures the profile to the embedded subscriber identification module.

6. A control method comprising the steps of:
controlling a new terminal to download a profile deleted by the old terminal configured in an embedded subscriber identification module;
receiving information on success or failure of the download from the new terminal; and
transmitting to the old terminal for re-downloading the profile when the download fails.

7. A control method comprising the steps of:
deleting a profile configured in an embedded subscriber identification module:
re-downloading the profile if another terminal fails to download the profile; and
reconfiguring the profile to the embedded subscriber identification module.
